# EUROPEAN PATENT APPLICATION

(11) **EP 3 104 437 A1**
(43) Date of publication of application: **14.12.2016**
(21) Application number: 15305888.8
(22) Date of filing: 10.06.2015
(51) Int. Cl.: H01M 4/136, H01M 4/36, H01M 4/58, H01M 10/04, H01M 10/052, H01M 10/054, H01M 10/0567

(54) **METAL CARBODIIMIDES AND METAL CYANAMIDES AS ELECTRODE MATERIALS**

(71) Applicant: Centre National de la Recherche Scientifique, 75016 Paris (FR)
(72) Inventor: SOUGRATI, Moulay Tahar, 34090 MONTPELLIER (FR); DARWICHE, Ali, 34000 MONTPELLIER (FR); MONCONDUIT, Laure, 34830 JACOU (FR); STIEVANO, Lorenzo, 34150 MONTPEYROUX (FR); HERMANN, Raphaël Pierre, B-4540 AMAY (BE); MAHMOUD, Abdelfattah, Allemagne JUELICH (DE); HERLITSCHKE, Marcus, 03238 Finsterwalde (DE); DRONSKOWSKI, Richard Vinzenz, D-52146 WÜRSELEN (DE); LIU, Xiaohui, 6164XC GELEEN (NL)
(74) Representative: Goulard, Sophie

(57) **Abstract**

The invention relates to the use of a metal carbodiimide or a metal cyanamide as a new active material for a negative electrode, a negative electrode comprising said metal carbodiimide or metal cyanamide, its preparation method, a battery comprising said negative electrode, and a method for the preparation of a composite material.

## Description

The invention relates to the use of a metal carbodiimide or a metal cyanamide as a new active material for a negative electrode, a negative electrode comprising said metal carbodiimide or metal cyanamide, its preparation method, a battery comprising said negative electrode, and a method for the preparation of a composite material.

Lithium battery technology has become increasingly important in recent years and has proved to be the most efficient energy storage strategy for a wide range of portable devices like cellular phones, laptops and digital electronics. These batteries are also of interest because of their possible application in hybrid electric vehicles (HEV), plug in hybrid electric vehicles (PHEV) and pure electric vehicles (PEV). However, their use in said vehicles requires from two to five times more energy density than the present lithium batteries technology can offer (150 Wh/kg).

The commercialized Li-ion batteries with high power generally comprise a carbon derivative as the negative electrode material because of its low potential with respect to Li⁺/Li and its high energy density with the formation of LiC₆. The carbon derivative may be a "hard carbon", containing primarily sp² carbon atoms, a "soft carbon" containing primarily sp³ carbon atoms, or an intermediate variety of carbon in which variable proportions of sp² carbon atoms and sp³ carbon atoms coexist. The carbon derivative may also be natural graphite or artificial graphite, optionally covered with ungraphitized carbon which protects against exfoliation during electrochemical operation. The major drawback of these negative electrode materials is the consumption of a part of the current, and hence of lithium ions originating from the positive electrode during the first charge, the result of this being the formation on the negative electrode of a protective layer, called passivating layer (or SEI layer), which prevents subsequent reaction of the electrolyte on the negative electrode into which the lithium is inserted. This phenomenon gives rise to a decrease in the energy density of the battery, since the lithium rendered unusable is withdrawn from the positive electrode material, which then has a lower specific capacity (90-210 mAh.g⁻¹). In practice, between 5% and 25% of the initial capacity is lost in this way.

As lithium resources continue to decline worldwide, studies have also been carried on other potential candidates to replace lithium in particular with sodium since it is cheaper, non-toxic, more evenly spread worldwide and more abundant than lithium. In a sodium battery, a carbon derivative can also be used as a negative electrode material and leads to reversible Na⁺ insertions of the order of 200 mAh.g⁻¹. However, here as well, the formation of a passivating layer represents a loss of 15% to 25% of the initial capacity in the first cycle. In addition, sodium is employed for use in place of lithium in applications where the stored energy density is less critical than for portable electronics or automotive transport.

Therefore, efforts have been made in lithium batteries as well as in sodium batteries to replace graphite or carbon derivatives with other negative electrode materials such as intercalation/de-intercalation materials (e.g. TiO₂, Li₄Ti₅O₁₂), alloy/de-alloy materials (e.g. Si, Ge, Sn, Al, Bi, SnO₂) and conversion materials (e.g. transition metal oxides such as MnₓO_{y}, NiO, FeₓO_{y}, CuO, Cu₂O, MoO₂, metal sulfides, metal phosphides and metal nitrides). Indeed, most of them possess a specific capacity higher than 500 mAh.g⁻¹.

However, in order to address both energy and power demands for future energy storage applications, the development and selection of other suitable negative electrode materials which can provide high reversible capacities, increased power capability, long cycling stability and free from safety concerns are still required.

The objective of the present invention is to overcome in part or in full the aforementioned disadvantages of the prior art, and more particularly provide the use of a new active material for a negative electrode, capable of inserting alkali metal or alkaline earth metal ions (e.g. lithium or sodium ions) reversibly, while guaranteeing good electrochemical properties in terms of capacities and cycling stability.

This objective is also to provide a new negative electrode which comprises said new active material, a method for producing the negative electrode, and a battery which comprises said negative electrode, said electrode and said battery having good electrochemical properties in terms of capacities and cycling stability.

Indeed, the inventors have found that, surprisingly, the use of metal carbodiimides or metal cyanamides as negative electrode materials leads to good electrochemical properties in a primary or secondary battery, and more particularly in a lithium or sodium primary or secondary battery.

The first object of the present invention is thus the use of a metal carbodiimide or a metal cyanamide responding to the following formula (I):

MₓM'_{y}(NCN)_{w} (I)

in which:
* M is a metal selected from the group consisting of Cr, Fe, Co, Ni, Cu, Zn, Cd, Hg, Pb, Ag, Si, In, Ti and Sn,
* M' is a metal different from M and selected from the group consisting of Mn, Cr, Fe, Co, Ni, Cu, Zn, Cd, Hg, Pb, Ag, Si, In, Ti and Sn,
* 1 ≤ x + y ≤ 2,
* 1 ≤ w ≤ 3,
* 0 < x ≤ 2, and preferably 1 ≤ x ≤ 2,
* 0 ≤ y ≤2, and preferably 0 ≤ y ≤ 1,
* each of x, y and w is an integer or a non-integer, and
* the values of x, y and w are chosen such that the metal carbodiimide or the metal cyanamide (I) is electronically neutral in view of the oxidation state(s) of the element or elements represented by M and M',
as an active material for a negative electrode.

In one embodiment, y = 0.

Examples of such metal carbodiimides or metal cyanamides (I) can be FeNCN, ZnNCN or Cr₂(NCN)₃.

In another embodiment, y ≠ 0.

Examples of such metal carbodiimides or metal cyanamides (I) can be Fe₁₋ₐCoₐNCN, Fe₁₋ₐNiₐNCN or Fe₁₋ₐMnₐNCN, in which 0 < a < 1.

Different methods have been reported to prepare metal carbodiimides or metal cyanamides responding to formula (I) in which y = 0.

As an example, Liu et al. [Z. Naturforsch. B, 2005, 60, 593] have described a slow oxidation approach to prepare CuNCN from Cu₄(NCN)₂NH₃ at room temperature. The same compound was prepared by Koziej et al. [J. Mater. Chem., 2009, 19, 5122-5124] following a non-aqueous soft chemistry approach *via* the reaction of copper chloride (CuCl₂) with cyanamide and benzylamine. This is one of the most promising route leading to metal carbodiimides or metal cyanamides, nevertheless other routes are also possible, such as the metathesis reaction involving the heating of a mixture comprising an appropriate metal carbodiimide or metal cyanamide (e.g. zinc cyanamide) and a chloride of another appropriate metal (e.g. manganese (II) chloride or chromium (III) chloride), or the decomposition under argon of a compound of formula M¹(NCNH)₂ (M¹ being for example Ni, Co or Fe).

The inventors have found that metal carbodiimides or metal cyanamides of formula (I) display higher capacities than graphite which is the most commonly used negative active material in commercialized batteries. In addition, they are able to be used under high currents such as under very high charge/discharge rates (e.g. under 32 C ∼ 9000 mA.g⁻¹).

A second object of the present invention is a negative electrode comprising a negative electrode material including an active material, a binder and a conductive agent, wherein the active material is a metal carbodiimide or a metal cyanamide (I) as defined in the first object of the present invention.

The negative electrode material preferably includes:
- at least about 50% by weight of a metal carbodiimide or a metal cyanamide (I) as defined in the first object of the present invention;
- from about 0% to 40% by weight of a conductive agent; and
- from about 0% to 40% by weight of a binder.

In one preferred embodiment, the negative electrode material includes:
- from about 50% to 80% by weight of a metal carbodiimide or a metal cyanamide (I) as defined in the first object of the present invention;
- from about 10% to 40% by weight of a conductive agent; and
- from about 10% to 40% by weight of a binder.

In a more preferred embodiment, the negative electrode material includes:
- from about 50% to 65% by weight of a metal carbodiimide or a metal cyanamide (I) as defined in the first object of the present invention;
- from about 15% to 35% by weight of a conductive agent; and
- from about 10% to 25% by weight of a binder.

The conductive agent may be carbon black, Super P carbon black, acetylene black, ketjen black, channel black, natural or synthetic graphite, carbon fibers, carbon nanotubes, vapor grown carbon fibers or a mixture thereof.

In an advantageous embodiment, the conductive agent is a mixture of a conventional carbon conductive agent such as carbon black, Super P carbon black, acetylene black, ketjen black, channel black, natural or synthetic graphite and of conductive fibers such as carbon fibers, carbon nanotubes or vapor grown carbon fibers. A mixture of carbon black and vapor grown carbon fibers is preferred.

The binder is preferably a polymer which has a high modulus of elasticity (e.g. of the order of several hundred MPa), and which is stable under the temperature and voltage conditions in which the negative electrode is intended to operate. The binder maintains adhesion of the negative electrode material to the current collector, maintain ionic contact, and facilitate the formation of a stable interface with the electrolyte.

The binder may be selected from fluoropolymers such as poly(vinylidene fluoride) or poly(tetrafluoroethylene), cellulose fibers, cellulose derivatives such as starch, carboxymethyl cellulose (CMC), diacetyl cellulose hydroxyethyl cellulose or hydroxypropyl cellulose, styrene butadiene rubber (SBR) and a mixture thereof.

Cellulose derivatives, more particularly carboxymethyl cellulose (CMC), are preferred.

The negative electrode material preferably has a thickness ranging from about 10 to 25 µm, and more preferably from about 15 to 20 µm.

If the thickness of the negative electrode material is greater than 25 µm, the specific capacity decreases due to a lower ionic and electronic percolation.

The loading of active material (i.e. metal carbodiimide or metal cyanamide (I)) on the negative electrode may range from about 1 to 5 mg/cm², and preferably from about 1 to 3 mg/cm².

A negative electrode according to the invention can further comprise a current collector which carries the aforementioned negative electrode material.

The negative electrode material can then be in the form of a film carried by a current collector or in the form of a compacted powder layer carried by a current collector.

The negative electrode material is preferably in the form of a film carried by the current collector, so as to improve the electrochemical properties (e.g. the specific capacity).

The current collector is preferably composed of a conductive material, more particularly of a metallic material which may be selected from copper, aluminum, nickel, steel and iron.

The metallic material may be in the form of a metallic foil, a metallic grid or a metallic foam, and preferably in the form of a metallic foil.

The thickness of the current collector can range from about 10 to 25 µm.

Metal carbodiimides or metal cyanamides based-negative electrodes of the present invention are operating in voltage window significantly higher than 0 V, which prevents Li-plating and renders said electrodes safer than graphite.

In addition, they have also better cycling stability than published negative electrodes used in sodium batteries and excellent stability for operating at high rates.

It is particularly advantageous to prepare the negative electrode according to the following steps:
- preparing a slurry of a mixture comprising a metal carbodiimide or a metal cyanamide (I) as defined in the first object of the present invention, a binder and a conductive agent as defined in the second object of the present invention,
- grinding said slurry, preferably by ball-milling,
- applying the resulting slurry on a support, preferably by tape casting, and
- drying the resulting slurry applied on a support.

Thanks to this method, improved electrochemical performances are obtained.

The slurry is preferably an aqueous slurry. However, a volatile organic solvent can also be used alone or in combination with water, so as to form the slurry. The volatile solvent is generally added to improve the solubility properties of the binder in the slurry.

The volatile organic solvent may be selected from acetone, tetrahydrofuran, diethyl ether, hexane, and N-methylpyrrolidone.

The components of the negative electrode material, namely the metal carbodiimide or the metal cyanamide (I), the binder and the conductive agent, may represent from about 10 to 50% by weight of the total weight of the slurry, and preferably from about 10 to 30% by weight of the total weight of the slurry.

The grinding step is preferably performed by planetary ball-milling, more particularly during about 30 minutes to one hour.

The drying step is preferably carried out during at least about 12 hours, advantageously at a temperature ranging from about room temperature (i.e. about 20-25°C) to about 120°C.

The drying step aims at removing the volatile organic solvent or the water or the mixture thereof.

The support may be the current collector as defined in the second object of the present invention.

In another embodiment, the support may be a glass support so as to prepare a film of negative electrode material on said support. Thus, after the drying step, the method can further comprise a step of removing the film formed after drying from the support, and applying said film to a current collector.

A third object of the present invention is a battery comprising:
- at least one positive electrode,
- at least one negative electrode,
- said positive and negative electrodes being separated by an electrolyte,
- said battery operating by circulation of cations Aⁿ⁺ between said positive electrode and said negative electrode, with n = 1 or 2 and said cation Aⁿ⁺ being selected from alkali metal ions and alkaline earth metal ions, preferably from Li, Na, K, Ca, and Mg, and more preferably from Li and Na,
- the electrolyte comprising mobile cations Aⁿ⁺, and
   wherein the negative electrode is as defined in the second object of the present invention.

The positive electrode of a battery according to the invention comprises a positive electrode material including an active material capable of reversible insertion of cations Aⁿ⁺ or reaction with cations Aⁿ⁺ at a potential greater than the operating potential of the negative electrode, optionally a conductive agent and optionally a binder.

The positive electrode can further comprise a current collector which carries the aforementioned positive electrode material.

The current collector may be composed of a conductive material, more particularly of a metallic material which may be selected from aluminium, steel and iron.

The binder and the conductive agent may be defined as in the second object of the present invention.

Aⁿ⁺ is preferably a sodium ion Na⁺ or a lithium ion Li⁺.

Examples of active materials for the positive electrode of a lithium battery and thus, capable of reversibly inserting lithium ions may be:
- transition metal chalcogenides, more particularly oxides LiᵥT^{a}O₂, in which 0 ≤ v ≤ 1 and T^{a} represents at least one element selected from Co, Ni, and Mn, a part of which may be replaced by Mg or Al;
- phosphates of olivine structure Li_{v'}T^{b}PO₄, in which 0 ≤ v' ≤ 1 and T^{b} represents at least one element selected from Fe, Mn and a mixture of Fe and Mn, a part of which may be replaced by Co, Ni or Mg;
- silicates Li₂₋ₛT^{c}SiO₄ and fluorophosphates LiᵣT^{c}PO₄F, in which 0 ≤ s < 2, 1 ≤ r ≤ 2 and T^{c} represents at least one element selected from Fe, Mn, Co, Ni, and Ti, a part of which may be replaced by Mg or Al; or
- fluorosulfates LiₜT^{d}SO₄F, in which 0 ≤ t ≤ 1 and T^{d} represents at least one element selected from Fe, Mn, Co, and Ni, a part of which may be replaced by Mg and a part of the sulfate groups SO₄²⁻ of which may be replaced by the isosteric and iso-charge group PO₃F²⁻.

Examples of active material for the positive electrode of a sodium battery and thus capable of reversibly inserting sodium ions, may be:
- lamellar fluorophosphates Na₂T'^{a}PO₄F, in which T'^{a} represents a divalent element selected from Fe, Mn, Co, and Ni, which may be replaced partially by Mg or Zn;
- fluorosulfates NaT'^{b}SO₄F, in which T'^{b} represents at least one element selected from Fe, Mn, Co, Ni and mixture thereof, a part of which is optionally replaced by Mg, and a part of the sulfate groups SO₄²⁻ of which is optionally replaced by the isosteric and iso-charge group PO₃F²⁻;
- Na_{v"}T'^{c}O₂, in which 0.4 ≤ v" ≤ 1, and T'^{c} represents Mn or Co (for example Na_{0.44}MnO₂ or Na_{0.7}MnO₂); or
- dithiocarbamates Na[CS₂NR'R"], in which each of the groups R' and R" represents a methyl, ethyl, or propyl radical, or else, or R' and R" form a ring (for example, pyrrolidine or morpholine).

The positive electrode material can be in the form of a film carried by a current collector or in the form of a compacted powder layer carried by a current collector.

The positive electrode material is preferably in the form of a film carried by a current collector.

The thickness of the current collector can range from about 10 to 25 µm.

The positive electrode material preferably has a thickness ranging from about 10 to 25 µm.

The electrolyte of the battery according to the invention is generally a solution comprising a salt of said alkali metal or alkaline earth metal A, preferably a salt of Li, Na, K, Ca or Mg, and more preferably a salt of Li or Na, and a solvent.

The solvent may be a liquid solvent, optionally gelled by a polymer, or a polar polymer solvent which is optionally plasticized by a liquid.

The proportion of liquid solvent in the solvent may vary from about 2% by volume (corresponding to a plasticized solvent) to about 98% by volume (corresponding to a gelled solvent).

In a sodium battery, the alkali metal salt is a sodium salt, preferably selected from the group consisting of NaClO₄, NaBF₄, NaPF₆, Na₂SO₄, NaNO₃, Na₃PO₄, Na₂CO₃, sodium salts having a perfluoroalkanesulfonate anion, sodium bis(perfluoroalkanesulfonyl)methane, sodium tris(perfluoroalkanesulfonyl)methane and sodium bis(perfluoroalkanesulfonyl)imide (e.g. NaTFSI, also known under the chemical name sodium bis(trifluoromethanesulfonyl)imide).

In a lithium battery, the alkali metal salt is a lithium salt, preferably selected from the group consisting of LiClO₄, LiBF₄, LiPF₆, Li₂SO₄, LiNO₃, Li₃PO₄, Li₂CO₃, lithium salts having a perfluoroalkanesulfonate anion, lithium bis(perfluoroalkanesulfonyl)methane, lithium tris(perfluoroalkanesulfonyl)methane and lithium bis(perfluoroalkanesulfonyl)imide (e.g. LiTFSI, also known under the chemical name lithium bis(trifluoromethanesulfonyl)imide).

The liquid solvent may be composed of at least one polar aprotic solvent selected from cyclic and linear carbonates (e.g. ethylene carbonate, propylene carbonate, butylene carbonate, dimethyl carbonate, diethyl carbonate, dipropyl carbonate, ethyl methyl carbonate, vinylene carbonate, fluoroethylene carbonate), esters, nitriles (e.g. acetonitrile, benzonitrile), nitro derivatives (nitromethane, nitrobenzene), amides (e.g. dimethylformamide, diethylformamide, N-methylpyrrolidone), sulfones (e.g. dimethylsulfone, tetramethylene sulfone), sulfolanes, alkylsulfamides (tetraalkylsulfonamides having from 5 to 10 carbon atoms), partially hydrogenated hydrocarbons, cyclic and linear ethers (e.g. diethyl ether, tetrahydrofuran, dimethoxyethane, dioxane, glyme, dimethyltetrahydrofuran, methyl), polyethylene glycol ethers (e.g. RO(CH₂CH₂O)ₙR' in which R and R' are CH₃ or C₂H₅ and 1 ≤ n ≤ 12), tetraalkyl sulfamides (e.g. RR'NSO₂NR"R"' in which R, R', R", and R"' are CH₃ or C₂H₅), 3-methyl-1,3-oxazolidin-2-one, and cyclic esters (e.g. γ-butyrolactone).

Said liquid solvent may optionally be gelled by addition of a polymer obtained, for example, from one or more monomers selected from ethylene oxide, propylene oxide, methyl methacrylate, methyl acrylate, acrylonitrile, methacrylonitrile, N-vinylpyrrolidone and vinylidene fluoride, said polymer having a linear, comb, random, alternating, or block structure, and being crosslinked or not.

The polar polymer solvent may be selected from crosslinked or non-crosslinked solvating polymers which do or do not carry grafted ionic groups. A solvating polymer is a polymer which comprises solvating units containing at least one heteroatom selected from sulphur, oxygen, nitrogen and fluorine. Examples of solvating polymers include linear, comb or block polyethers which do or do not form a network, based on poly(ethylene oxide), or copolymers containing the ethylene oxide or propylene oxide or allyl glycidyl ether unit or at least 50% of repeating units -CH₂CH₂O- and having a linear, comb, random, alternating or block structure, polyphosphazenes, crosslinked networks based on polyethylene glycol crosslinked by isocyanates, or the networks obtained by polycondensation and carrying moieties which allow the incorporation of crosslinkable moieties. Also included are block copolymers in which some blocks carry functions which have redox properties. Of course, the list above is not limitative, and all polymers having solvating properties may be used.

Said polar polymer solvent may optionally be plasticized by addition of a liquid, more particularly a polar aprotic solvent as defined in the present invention.

In one particular embodiment, each of the electrodes of a battery according to the invention is composed of a thin film.

By "thin film" is meant a film having a thickness of the order of 10 to 40 µm.

When the electrolyte is a solid polymer electrolyte, it is also in the form of a thin film.

When the electrolyte is a liquid electrolyte, said liquid impregnates a separator in the form of a thin film.

The separator may be a conventional polymer-based separator such as a Celgard^{®} separator or a Whatman^{®} borosilicate glass fiber separator.

The use of a solution of an alkali metal salt or an alkaline earth metal in a liquid solvent as the electrolyte for the battery of the invention is particularly preferred, so as to obtain a liquid electrolyte.

In a preferred embodiment, the electrolyte is a solution comprising a salt of said alkali metal or alkaline earth metal A and one or more of the carbonates selected from ethylene carbonate, propylene carbonate, dimethylcarbonate and vinylene carbonate.

In a more preferred embodiment, the solution (of the electrolyte) further comprises from about 1 to 5% in volume of fluoroethylene carbonate.

A battery according to the invention may be composed of a single electrochemical cell comprising two electrodes (i.e. one positive electrode and one negative electrode) separated by an electrolyte; of a plurality of cells assembled in series; of a plurality of cells assembled in parallel; or of a combination of the two assembly types.

A fourth object of the present invention is a method for the preparation of a composite material, wherein it comprises at least one step of submitting a battery as defined in the third object of the present invention to a charge.

The composite material obtained during the method may comprise:
- at least one phase P¹ consisting of a metal at the oxidation state (0) selected from the group consisting of M, M' and a mixture thereof, M and M' being as defined in the first object of the present invention,
- at least one phase P² consisting of a metal carbodiimide or a metal cyanamide responding to the following formula (II):

   A_{z}NCN (II)

   in which:
   * A is an alkali or alkaline earth metal, preferably an alkali or alkaline earth metal selected from the group consisting of Na, Li, K, Ca, Mg, Sr and Ba, and more preferably selected from Li and Na, and
   * z = 1 or 2, and
- optionally a phase P³ consisting of a metal carbodiimide or a metal cyanamide responding to the formula (I) as defined in the first object of the present invention.

The metal M (respectively the metal M') of the phase P¹ is the same as the metal M (respectively the metal M') of the phase P³.

The alkali or alkaline earth metal A is the same as the one used in the form of a salt in the electrolyte of the battery.

When the battery according to the third object of the present invention is submitted to a charge (e.g. during cycling), the metal carbodiimide or the metal cyanamide responding to the formula (I) used as an active material in a negative electrode is transformed into said composite material.

Thus, during the cycling of the battery, the metal carbodiimide or the metal cyanamide responding to the formula (I) is capable of reversible insertion or reaction with said cations Aⁿ⁺ so as to form said composite material.

The composite material of the present invention may represent an intimate mixture of phases P¹ and P² or an intimate mixture of phases P¹, P² and P³.

In a preferred embodiment, z = 2 and A is Li or Na.

In a more preferred embodiment, the composite material is selected from the following composite materials:
* (1-u) FeNCN / u Li₂NCN / u Fe,
* (1-u) FeNCN / u Na₂NCN / u Fe,
* (1-u) ZnNCN / u Li₂NCN / u Zn,
* (1-u) ZnNCN / u Na₂NCN / u Zn,
* [(2-u')/2] Cr₂NCN₃/ (3u'/2) Li₂NCN / u' Cr, and
* [(2-u')/2] Cr₂NCN₃/ (3u'/2) Na₂NCN / u' Cr,
in which 2u and 3u' represent the molar proportion of Li or Na in the composite materials, 0 < u ≤ 1 and 0 < u' ≤ 2.

The present invention is illustrated in more detail in the examples below, but it is not limited to said examples.

### EXAMPLES

The starting materials used in the examples which follow, are listed below:
- Carboxymethyl cellulose (CMC): Aldrich, DS = 0.7, Mw = 250 000 g/mol;
- Vapor grown carbon fiber (VGCF-H): Showa Denko, diameter of about 100-200 nm and length of about 10-20 µm; and
- Carbon black: Sn2A, Y50A, specific surface of about 70 m².g⁻¹, and size of particles of about 30-60 nm.

Unless noted otherwise, these starting materials were used as received from the manufacturers, without additional purification.

### Example 1

### Use of FeNCN as an active material in a negative electrode of a sodium battery according to the invention

FeNCN was prepared according to the method described in Liu *et al.* [Chem. Eur. J., 2009, 15, 1558] by reaction of [Fe(NH₃)₆]²⁺ with H₂NCN in water so as to form Fe(NCNH)₂ and thermal decomposition of Fe(NCNH)₂ into FeNCN at 400 °C.

0.579 g of FeNCN was mixed with 0.173 g of carboxymethyl cellulose (CMC), 0.088 g of vapor grown carbon fibers and 0.160 g of carbon black in 6 ml of water to form an aqueous slurry containing 8.3% by weight of FeNCN, 2.5% by weight of CMC and 3.5% by weight of conductive agent.

The components of the negative electrode material, namely the metal carbodiimide or the metal cyanamide (I), the binder and the conductive agent, represent about 14.3% by weight of the total weight of the aqueous slurry.

The aqueous slurry was homogeneously mixed and ground for about 40 min in a planetary ball-mill commercialized under the brand name Pulverisette 7 by the firm Fritsch. It was then tape casted on a 18 µm thick copper foil, dried at room temperature for about 12h and finally at about 120°C under vacuum for another 12h.

The negative electrode material included 57.9% by weight of FeNCN, 17.3% by weight of CMC and 24.8% by weight of conductive agent.

The final mass loading of FeNCN on the negative electrode was about 1.5 mg/cm² and the thickness of the negative electrode material was about 17 µm.

The resulting negative electrode was mounted in an electrochemical cell in which the counter-electrode was composed of sodium metal, the electrolyte was a 1 M solution of NaPF₆ in a mixture of ethylene carbonate and dimethyl carbonate (1:1 in volume), said mixture further including about 5% in volume of fluoroethylene carbonate, and the separator was a Whatman GF/D borosilicate glass fiber disk. The cell was sealed and then a reducing current corresponding to a rate of C/5 (which corresponds to 0.2 Na⁺ per hour) was applied to it.

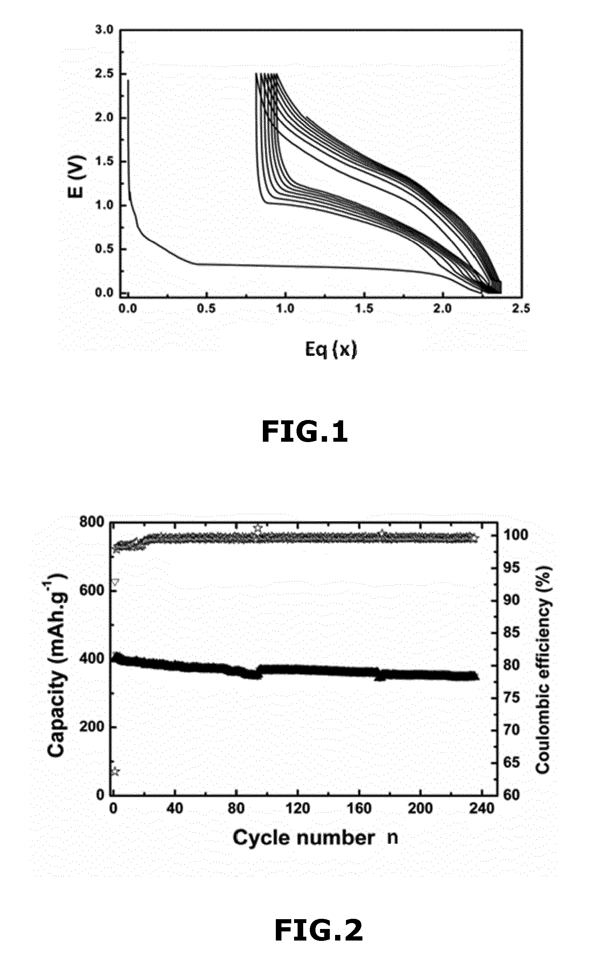

Figure 1 shows the variation in potential V (in volts vs. Na⁺/Na) as a function of the equivalent of the number x of Na⁺ ions inserted [Eq(x)] during the first seven charging/discharging cycles and figure 2 shows the specific capacity (in mAh.g⁻¹) (curve with solid triangles during the charge and curve with empty triangles during the discharge) and the coulombic efficiency (in %) (curve with empty stars) as a function of the number n of cycles.

Figure 1 demonstrates an irreversible phenomenon only during the 1st cycle. Then, during the following galvanostatic cycles, the insertion of Na⁺ into the iron carbodiimide FeNCN is perfectly reversible. In addition, it is shown that it is possible to reversibly insert about 1.4 sodium ions at most into the metal cyanamide FeNCN. In addition, the electrode displays a low average potential (1.25 V) which makes it particularly useful as a negative electrode in a sodium battery.

Figure 2 shows long cycling stability both on charge and on discharge (i.e. over more than 220 cycles), a high specific capacity of about 350-400 mAh.g⁻¹ and an excellent coulombic efficiency (almost 100% after 20 cycles).

### Example 2

### Use of FeNCN as an active material in a negative electrode of a lithium battery according to the invention

FeNCN was prepared according to the method described in example 1.

0.579 g of FeNCN were mixed with 0.173 g of carboxymethyl cellulose (CMC), 0.088 g of vapor grown carbon fibers and 0.160 g of carbon black in 6 ml of water to form an aqueous slurry containing 8.3% by weight of FeNCN, 2.5% by weight of CMC and 3.5% by weight of conductive agent.

The components of the negative electrode material, namely the metal carbodiimide or the metal cyanamide (I), the binder and the conductive agent, represent about 14.3% by weight of the total weight of the aqueous slurry.

The aqueous slurry was homogeneously mixed and ground for about 40 min in a planetary ball-mill such as the one defined in example 1. It was then tape casted on a 22 µm thick aluminium foil, dried at room temperature for about 12h and finally at about 120°C under vacuum for another 12h.

The final mass loading of FeNCN on the negative electrode was about 1.2 mg/cm² and the thickness of the negative electrode material was 17 µm.

The negative electrode material included 57.9% by weight of FeNCN, 17.3% by weight of CMC and 24.8% by weight of conductive agent

The resulting negative electrode was mounted in an electrochemical cell in which the counter-electrode was composed of lithium metal, the electrolyte was a 1 M solution of LiPF₆ in a mixture of ethylene carbonate, propylene carbonate and dimethyl carbonate (1:1:3), said mixture further including about 1% in volume of vinylene carbonate and about 5% in volume of fluoroethylene carbonate, and the separator was a Whatman GF/D borosilicate glass fiber disk. The cell was sealed and then a reducing current corresponding to a rate of C/10 (which corresponds to 0.1 Li⁺ per hour) was applied to it.

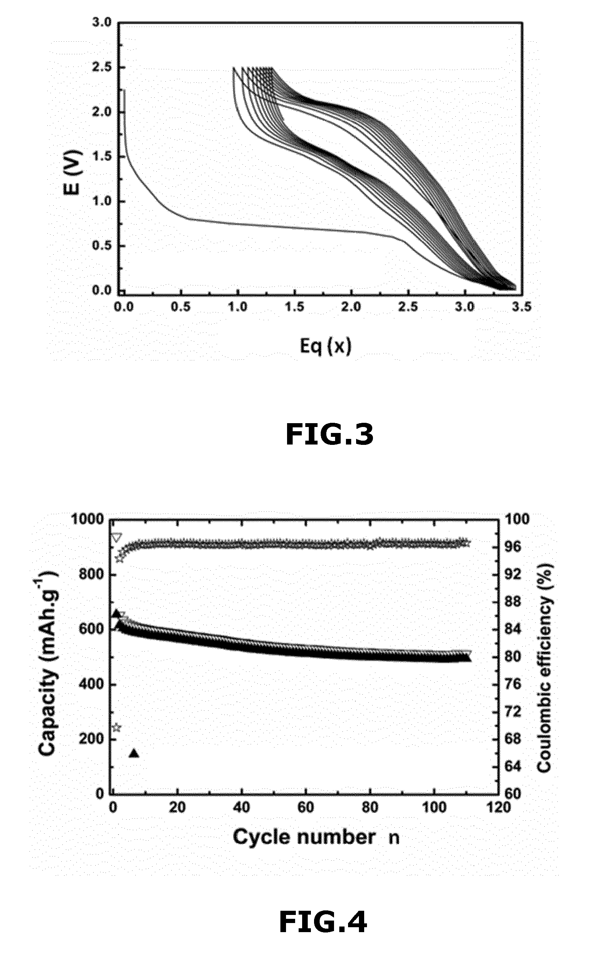

Figure 3 shows the variation in potential V (in volts vs. Li⁺/Li) as a function of the equivalent of the number x of Li⁺ ions inserted [Eq(x)] during the first ten charging/discharging cycles and figure 4 shows the specific capacity (in mAh.g⁻¹) (curve with solid triangles during the charge and curve with empty triangles during the discharge) and the coulombic efficiency (in %) (curve with empty stars) as a function of the number n of cycles.

Figure 3 demonstrates an irreversible phenomenon only during the 1st cycle. Then, during the following galvanostatic cycles, the insertion of Li⁺ into the iron carbodiimide FeNCN is perfectly reversible. In addition, it is shown that it is possible to reversibly insert about 2.0 lithium ions at most into the iron carbodiimide FeNCN.

Figure 4 shows long cycling stability both on charge and on discharge (i.e. over more than 110 cycles), a high specific capacity of about 600 mAh.g⁻¹ and a coulombic efficiency of 96%).

### Example 3

### Use of ZnNCN as an active material in a negative electrode of a lithium battery according to the invention

ZnNCN was prepared according to the method described in Liu *et al.* [X. Liu, PhD Dissertation, 2002, http://sylvester.bth.rwthaachen.de/dissertationen/2002/207/02_207.pdf] or by metathesis reaction of [Zn(NH₃)₄]²⁺ and cyanamide in aqueous solution described in Krott *et al.* (M. Krott, PhD Dissertation, 2009, http://publications.rwthaachen.de/record/51589/files/Krott_Manuel.pdf).

0.579 g of ZnNCN were mixed with 0.173 g of carboxymethyl cellulose (CMC), 0.088 g of vapor grown carbon fibers and 0.16 g of carbon black in 6 ml of water to form an aqueous slurry containing 8.3% by weight of ZnNCN, 2.5% by weight of CMC and 3.5% by weight of conductive agent.

The components of the negative electrode material, namely the metal carbodiimide or the metal cyanamide (I), the binder and the conductive agent, represent about 14.3% by weight of the total weight of the aqueous slurry.

The aqueous slurry was homogeneously mixed and ground for about 40 min in a planetary ball-mill such as the one defined in example 1. It was then tape casted on a 18 µm thick copper foil, dried at room temperature for about 12h and finally at about 120°C under vacuum for another 12h.

The negative electrode material included 57.9% by weight of ZnNCN, 17.3% by weight of CMC and 24.8% by weight of conductive agent

The final mass loading of ZnNCN on the negative electrode was about 1.5 mg/cm² and the thickness of the negative electrode material was about 17 µm.

The resulting negative electrode was mounted in an electrochemical cell in which the counter-electrode was composed of lithium metal, the electrolyte was a 1 M solution of LiPF₆ in a mixture of ethylene carbonate, propylene carbonate and dimethyl carbonate (1:1:3), said mixture further including about 1% in volume of vinylene carbonate and about 5% in volume of fluoroethylene carbonate, and the separator was a Whatman GF/D borosilicate glass fiber disk. The cell was sealed and then a reducing current corresponding to a rate of C/10 (which corresponds to 0.1 Li⁺ per hour) was applied to it.

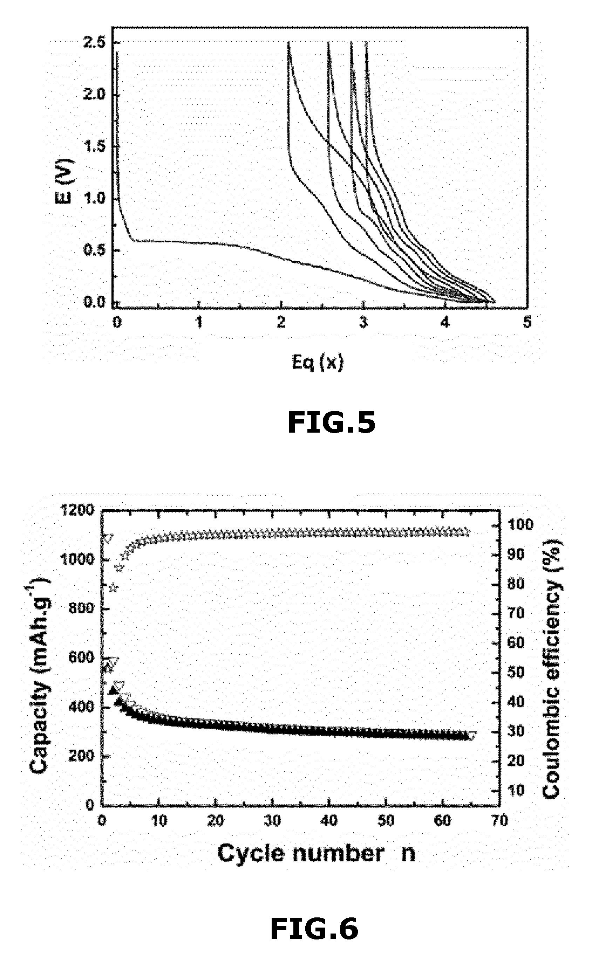

Figure 5 shows the variation in potential V (in volts vs. Li⁺/Li) as a function of the equivalent of the number x of Li⁺ ions inserted [Eq(x)] during the first four charging/discharging cycles and figure 5 shows the specific capacity (in mAh.g⁻¹) (curve with solid triangles during the charge and curve with empty triangles during the discharge) and the coulombic efficiency (in %) (curve with empty stars) as a function of the number n of cycles.

Figure 5 demonstrates a moderate irreversible phenomenon during the 1st cycle. Then, during the following galvanostatic cycles, the insertion of Li⁺ into the zinc carbodiimide ZnNCN is perfectly reversible. In addition, it is shown that it is possible to reversibly insert about 1.5 lithium ions at most into the zinc carbodiimide ZnNCN.

Figure 6 shows long cycling stability both on charge and on discharge (i.e. over more than 60 cycles), a moderate specific capacity of about 300 mAh.g⁻¹ and coulombic efficiency of 97%.

### Example 4

### Use of Cr₂(NCN)₃ as an active material in a negative electrode of a lithium battery according to the invention

Cr₂(NCN)₃ was prepared according to the method described in Tang et al. [Angew. Chem. Int. Ed., 2010, 49, 4738] by solid metathesis reaction of CrCl₃ and ZnNCN at 550°C.

0.579 g of Cr₂(NCN)₃ were mixed with 0.173 g of carboxymethyl cellulose (CMC), 0.088 g of vapor grown carbon fibers and 0.16 g of carbon black in 6 ml of water to form an aqueous slurry containing 8.3% by weight of Cr₂(NCN)₃, 2.5% by weight of CMC and 3.5% by weight of conductive agent.

The components of the negative electrode material, namely the metal carbodiimide or the metal cyanamide (I), the binder and the conductive agent, represent about 14.3% by weight of the total weight of the aqueous slurry.

The aqueous slurry was homogeneously mixed and ground for about 40 min in a planetary ball-mill such as the one defined in example 1. It was then tape casted on a 18 µm thick copper foil, dried at room temperature for about 12h and finally at about 120°C under vacuum for another 12h.

The negative electrode material included 57.9% by weight of Cr₂(NCN)₃, 17.3% by weight of CMC and 24.8% by weight of conductive agent

The final mass loading of Cr₂(NCN)₃ on the negative electrode was about 1.5 mg/cm² and the thickness of the negative electrode material was about 17 µm.

The resulting negative electrode was mounted in an electrochemical cell in which the counter-electrode was composed of lithium metal, the electrolyte was a 1 M solution of LiPF₆ in a mixture of ethylene carbonate, propylene carbonate and dimethyl carbonate (1:1:3), said mixture further including about 1% in volume of vinylene carbonate and about 5% in volume of fluoroethylene carbonate, and the separator was a Whatman GF/D borosilicate glass fiber disk. The cell was sealed and then a reducing current corresponding to a rate of C/10 (which corresponds to 0.1 Li⁺ per hour) was applied to it.

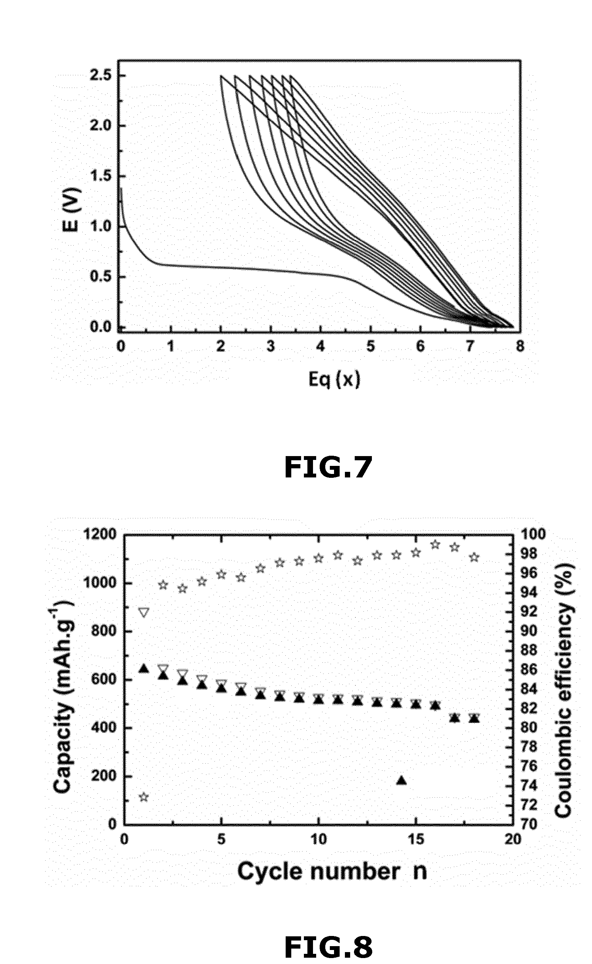

Figure 7 shows the variation in potential V (in volts vs. Li⁺/Li) as a function of the equivalent of the number x of Li⁺ ions inserted [Eq(x)] during the first seven charging/discharging cycles and figure 8 shows the specific capacity (in mAh.g⁻¹) (curve with solid triangles during the charge and curve with empty triangles during the discharge) and the coulombic efficiency (in %) (curve with empty stars) as a function of the number n of cycles.

Figure 8 demonstrates an irreversible phenomenon during the 1st cycle. Then, during the following galvanostatic cycles, the insertion of Li⁺ into the metal carbodiimide or the metal cyanamide **Cr₂(NCN)₃** is reversible. In addition, it is shown that it is possible to reversibly insert about 4 lithium ions at most into the chromium carbodiimide Cr₂(NCN)₃.

Figure 8 shows long cycling stability both on charging and on discharging (i.e. over more than 15 cycles), a high specific capacity of about 500 mAh.g⁻¹ and coulombic efficiency of about 98%.

### Comparative example 5

### Use of conductive carbon as an active material in a negative electrode of a lithium battery

0.35 g of commercial carbon Y50A were mixed with 0.35 g of vapor grown carbon fibers 0.3 g of carboxymethyl cellulose (CMC) in 6 ml of water to form an aqueous slurry containing 10% by weight of carbon (as an active material and a conductive agent) and 4.3% by weight of CMC.

The components of the negative electrode material, namely carbon and the binder, represent about 14.3% by weight of the total weight of the aqueous slurry.

The aqueous slurry was homogeneously mixed and ground for about 40 min in a planetary ball-mill such as the one defined in example 1. It was then tape casted on a 18 µm thick copper foil, dried at room temperature for about 12h and finally at about 120°C under vacuum for another 12h.

The negative electrode material (which is not part of the invention) included 70% by weight of carbon as an active material and a conductive agent and 30% by weight of CMC.

The resulting negative electrode was mounted in an electrochemical cell in which the counter-electrode was composed of lithium metal, the electrolyte was a 1 M solution of LiPF₆ in a mixture of ethylene carbonate, propylene carbonate and dimethyl carbonate (1:1:3), said mixture further including about 1% in volume of vinylene carbonate and about 5% in volume of fluoroethylene carbonate, and the separator was a Whatman GF/D borosilicate glass fiber disk. The cell was sealed and then a reducing current corresponding to a rate of C/10 was applied to it.

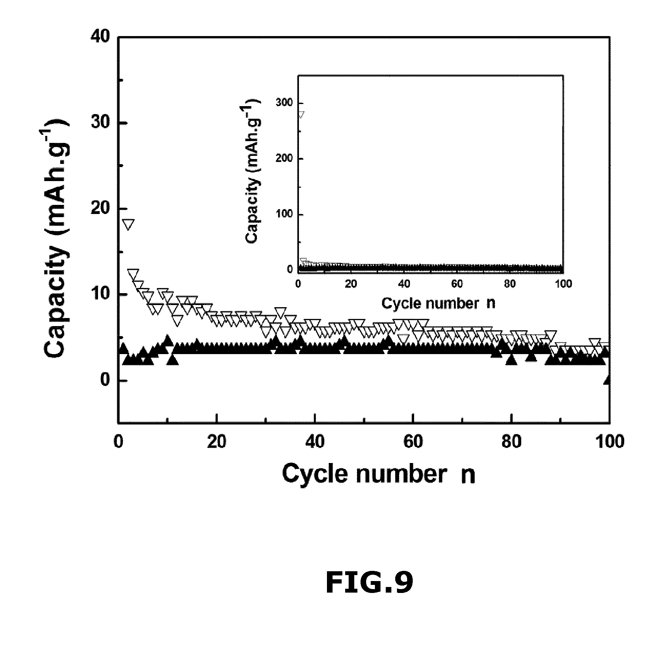

Figure 9 shows the specific capacity (in mAh.g⁻¹) (curve with solid triangles during the charge and curve with empty triangles during the discharge) as a function of the number n of cycles.

Figure 9 demonstrates a high irreversible phenomenon during the 1st cycle (reduction of the specific capacity by more than 96%). It also shows a lack of cycling stability especially on discharging and a low specific capacity of about 5 mAh.g⁻¹.

This example shows that the conducting agent and/or the binder used in the electrode material of the invention are not contributing to the obtained capacities since the specific capacity of a mixture of conducting agent and binder represents less than 1-2% of the capacities obtained for the negative electrode materials of the invention based on carbodiimide or cyanamide metals.

## Claims

1. Use of a metal carbodiimide or a metal cyanamide responding to the following formula (I):
MₓM'_{y}(NCN)_{w} (I)
in which:
* M is a metal selected from the group consisting of Cr, Fe, Co, Ni, Cu, Zn, Cd, Hg, Pb, Ag, Si, In, Ti and Sn,
* M' is a metal different from M and selected from the group consisting of Mn, Cr, Fe, Co, Ni, Cu, Zn, Cd, Hg, Pb, Ag, Si, In, Ti and Sn,
* 1 ≤ x + y≤ 2,
1 ≤ w ≤ 3,
*0 < x ≤ 2,
* 0 ≤ y ≤ 2,
* each of x, y and w is an integer or a non-integer, and
* the values of x, y and w are chosen such that the metal carbodiimide or the metal cyanamide (I) is electronically neutral in view of the oxidation state(s) of the element or elements represented by M and M',
as an active material for a negative electrode.

2. Use according to claim 1, wherein y = 0.

3. Use according to claim 1 or 2, wherein the metal carbodiimide or the metal cyanamide (I) is FeNCN, ZnNCN or Cr₂(NCN)₃.

4. A negative electrode comprising a negative electrode material including an active material, a binder and a conductive agent, wherein the active material is a metal carbodiimide or a metal cyanamide (I) as defined in any one of claims 1 to 3.

5. The negative electrode according to claim 4, wherein the negative electrode material includes:
- at least 50% by weight of a metal carbodiimide or a metal cyanamide (I) as defined in any one of claims 1 to 3;
- from 0% to 40% by weight of a conductive agent; and
- from 0% to 40% by weight of a binder.

6. The negative electrode according to claim 4 or claim 5, wherein the conductive agent is carbon black, Super P carbon black, acetylene black, ketjen black, channel black, natural or synthetic graphite, carbon fibers, carbon nanotubes, vapor grown carbon fibers or a mixture thereof.

7. The negative electrode according to any one of claims 4 to 6, wherein the binder is selected from fluoropolymers, cellulose fibers, cellulose derivatives, styrene butadiene rubber (SBR) and a mixture thereof.

8. The negative electrode according to any one of claims 4 to 7, wherein the negative electrode material has a thickness ranging from 10 to 25 µm.

9. The negative electrode according to any one of claims 4 to 8, wherein the loading of active material on the negative electrode ranges from 1 to 5 mg/cm².

10. The negative electrode according to any one of claims 4 to 9, wherein it further comprises a current collector which carries the negative electrode material.

11. The negative electrode according to claim 10, wherein the negative electrode material is in the form of a film carried by the current collector.

12. A battery comprising:
- at least one positive electrode,
- at least one negative electrode,
- said positive and negative electrodes being separated by an electrolyte,
- said battery operating by circulation of cations Aⁿ⁺ between said positive electrode and said negative electrode, with n = 1 or 2 and said cation Aⁿ⁺ being selected from alkali metal ions and alkaline earth metal ions,
- the electrolyte comprising mobile cations Aⁿ⁺, and
wherein the negative electrode is as defined in any one of claims 4 to 11.

13. The battery according to claim 12, wherein the positive electrode comprises a positive electrode material including an active material capable of reversible insertion of cations Aⁿ⁺ or reaction with cations Aⁿ⁺ at a potential greater than the operating potential of the negative electrode, optionally a conductive agent and optionally a binder.

14. The battery according to claim 12 or claim 13, wherein the electrolyte is a solution comprising a salt of said alkali metal or alkaline earth metal A and a solvent.

15. The battery according to any one of claims 12 to 14, wherein the electrolyte is a solution comprising a salt of said alkali metal or alkaline earth metal A and one or more of the carbonates selected from ethylene carbonate, propylene carbonate, dimethylcarbonate and vinylene carbonate.

16. The battery according to claim 15, wherein the solution further comprises from 1 to 5% in volume of fluoroethylene carbonate.

17. The battery according to any one of claims 12 to 16, wherein Aⁿ⁺ is a sodium ion Na⁺ or a lithium ion Li⁺.

18. A method for the preparation of a composite material, wherein it comprises at least one step of submitting a battery as defined in any one of claims 12 to 17 to a charge.

19. The method according to claim 18, wherein the composite material comprises:
- at least one phase P¹ consisting of a metal at the oxidation state (0) selected from the group consisting of M, M' and a mixture thereof, M and M' being as defined in any one of claims 1 to 3,
- at least one phase P² consisting of a metal carbodiimide or a metal cyanamide responding to the following formula (II):
A_{z}NCN (II)
in which:
* A is an alkali or alkaline earth metal, and
* z = 1 or 2, and
- optionally a phase P³ consisting of a metal carbodiimide or a metal cyanamide responding to the formula (I) as defined in any one of claims 1 to 3.
